# EUROPEAN PATENT APPLICATION

(11) **EP 3 376 647 A1**
(43) Date of publication of application: **19.09.2018**
(21) Application number: 18161598.0
(22) Date of filing: 13.03.2018
(51) Int. Cl.: H02K 9/22, H02K 9/06, H02K 5/20, H02K 5/18

(54) **BLOWER AND VACUUM CLEANER**

(30) Priority: 17.03.2017 US 201762472768 P; 21.07.2017 JP 2017142249
(71) Applicant: Nidec Corporation, Minami-ku, Kyoto-shi, Kyoto 601-8205 (JP)
(72) Inventor: SHIOZAWA, Kazuhiko, Kyoto, Kyoto 601-8205 (JP)
(74) Representative: Zimmermann, Tankred Klaus

(57) **Abstract**

A blower (A) includes an impeller (20) capable of rotating around a central axis (C) extending in an up-down direction; a motor (10) that rotates the impeller (20); a motor housing (3) surrounding an outer side in a radial direction of the motor (10); and a thermally conductive member (70) arranged in the motor housing (3). The motor (10) includes a shaft (11) arranged along the central axis (C), a rotor (12) that is fixed to the shaft (11) and that rotates together with the shaft (11), and a stator (13) facing the rotor (12) in the radial direction. The thermally conductive member (70) includes a first contact portion (71) that contacts the stator (13), and a second contact portion (72) that contacts the motor housing (3).

## Description

### Field of the Invention

The present disclosure relates to a blower and a vacuum cleaner including the blower.

### Description of the Related Art

A conventional motor-operated blower (blower) is disclosed in Japanese Unexamined Patent Application Publication No. 2015-059507. The motor-operated blower is mounted on an electric vacuum cleaner, and includes a rotor attached to a shaft, a stator located at the outer periphery of the rotor, a bracket that holds the stator and rotatably holds the rotor, an impeller attached to the shaft, and a casing that covers the impeller and has an air inlet port at a center portion of the casing. The rotor includes a rotor core formed by stacking a plurality of thin magnetic steel sheets. The stator includes a stator core formed by stacking a plurality of thin magnetic steel sheets.

At least one of the rotor core and the stator core is formed by stacking a plurality of types of magnetic steel sheets having different shapes. By using the core formed by stacking the plurality of types of magnetic steel sheets having the different shapes, the surface area of the core is increased, the area by which the core contacts the wind generated by the motor-operated blower is increased, and hence cooling efficiency is increased.

However, regarding the motor-operated blower described in Japanese Unexamined Patent Application Publication No. 2015-059507, the wind generated by the motor-operated blower has to be guided toward the stator core or the rotor, and therefore air sending efficiency is decreased.

### SUMMARY OF THE INVENTION

A blower according to an exemplary embodiment of the present disclosure includes an impeller capable of rotating around a central axis extending in an up-down direction; a motor that rotates the impeller; a motor housing surrounding an outer side in a radial direction of the motor; and a thermally conductive member arranged in the motor housing. The motor includes a shaft arranged along the central axis, a rotor that is fixed to the shaft and that rotates together with the shaft, and a stator facing the rotor in the radial direction. The thermally conductive member includes a first contact portion that contacts the stator, and a second contact portion that contacts the motor housing.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a vacuum cleaner according to a first embodiment;
Fig. 2 is a perspective view of a blower according to the first embodiment;
Fig. 3 is a vertical sectional view of the blower illustrated in Fig. 2;
Fig. 4 is an exploded perspective view of the blower illustrated in Fig. 2;
Fig. 5 is a perspective view of an upper housing and a stator core from below;
Fig. 6 is a perspective view of the upper housing from above;
Fig. 7 is a perspective view of the upper housing from below;
Fig. 8 is a perspective view of an impeller;
Fig. 9 is an enlarged sectional view of a section in a radial direction of peripheral portions of the upper housing and the impeller (section including central axis);
Fig. 10 is a perspective view of the blower in a state in which an impeller cover is removed;
Fig. 11 is a side view of the blower illustrated in Fig. 10;
Fig. 12 is a schematic sectional view in a state in which the balance of the impeller is adjusted;
Fig. 13 is a plan view of the impeller;
Fig. 14 is a plan view illustrating a modification of a top recess;
Fig. 15 is a sectional view of the top recess in a circumferential direction;
Fig. 16 is an enlarged sectional view of a section in the radial direction of the upper housing (section including central axis);
Fig. 17 is a perspective view of a blower according to a second embodiment of the present disclosure;
Fig. 18 is a vertical sectional view of the blower illustrated in Fig. 17;
Fig. 19 is a perspective view of an upper housing from below;
Fig. 20 is a sectional view taken along line XX-XX of the blower illustrated in Fig. 18; and
Fig. 21 is a vertical sectional view of a blower according to a third embodiment of the present disclosure.

### DETAILED DESCRIPTION OF THE PREFERRED EMBODIMENTS

Exemplarily embodiments of the present disclosure are described below with reference to the drawings. In this description, regarding a blower A, a direction parallel to the central axis C of the blower A is named "axial direction," a direction orthogonal to the central axis C of the blower A is named "radial direction," and a direction extending along an arc centered at the central axis C of the blower A is named "circumferential direction." Likewise, regarding an impeller 20, in a state in which the impeller 20 is assembled in the blower A, directions corresponding to the axial direction, radial direction, and circumferential direction of the blower A are respectively merely called "axial direction," "radial direction," and "circumferential direction." Also, in this description, regarding the blower A, the shapes of components and the positional relationships among the components are described while the axial direction is an up-down direction and an air inlet port 43 side of an impeller cover 41 is an upper side with respect to the impeller 20. The up-down direction is a name merely used for the explanation, and is not used for limiting the positional relationships and directions in a state of use of the blower A. Also, "upstream" and "downstream" respectively represent upstream and downstream in a circulation direction of the air sucked from the air inlet port 43 when the impeller 20 is rotated.

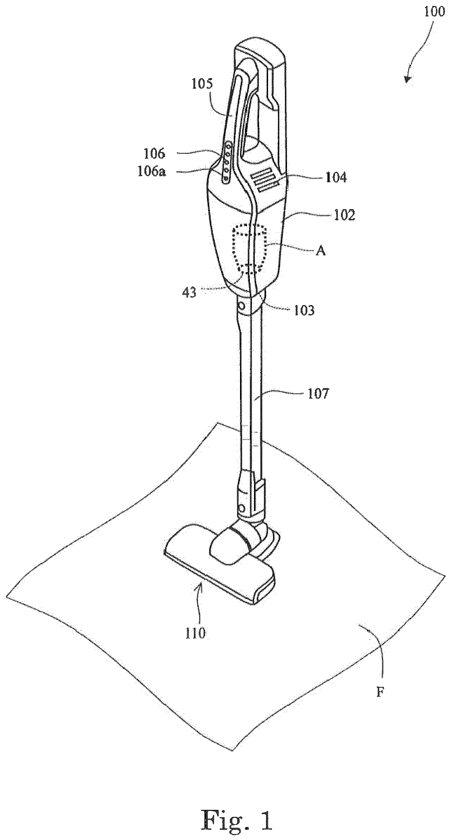

Also, in this description, regarding a vacuum cleaner 100, the shapes of components and the positional relationships among the components are described while a direction toward a floor surface F (surface to be cleaned) in Fig. 1 is named "downward," and a direction away from the floor surface F is named "upward." It is to be noted that the directions are names merely used for the explanation, and are not used for limiting the positional relationships and directions in the state of use of the vacuum cleaner 100. Also, "upstream" and "downstream" respectively represent upstream and downstream in a circulation direction of the air sucked from an air inlet portion 103 when the blower A is driven.

Now, a vacuum cleaner 100 according to an exemplarily embodiment of the present disclosure is described. Fig. 1 is a perspective view of a vacuum cleaner according to a first embodiment. The vacuum cleaner 100 is a stick-shaped electric vacuum cleaner. The vacuum cleaner 100 includes a casing 102 having an air inlet portion 103 open at a lower surface of the casing 102 and an air outlet portion 104 open at an upper surface of the casing 102. A power cable (not illustrated) extends from a rear surface of the casing 102. The power cable is connected to a power receptacle (not illustrated) provided at a side wall surface or another part of a room, and supplies the vacuum cleaner 100 with electric power. Alternatively, the vacuum cleaner 100 may be a robot-type, canister-type, or handy-type electric vacuum cleaner.

An air channel (not illustrated) that couples the air inlet portion 103 with the air outlet portion 104 is formed in the casing 102. In the air channel, a dust collector (not illustrated), a filter (not illustrated), and a blower A are disposed in that order from the upstream side toward the downstream side. Foreign substances such as dust contained in the air circulating in the air channel are blocked by the filter and collected in the dust collector formed in a container-like shape. The dust collector and the filter are detachably attached to the casing 102.

A handle 105 and an operation part 106 are provided at an upper section of the casing 102. A user can hold the handle 105 and move the vacuum cleaner 100. The operation part 106 has a plurality of buttons 106a. Operational setting of the vacuum cleaner 100 is made by operating the buttons 106a. For example, by operating the buttons 106a, start of driving, stop of driving, change of the rotation speed of the blower A, and so forth, are instructed. A tube-shaped suction pipe 107 is connected to the air inlet portion 103. A suction nozzle 110 is attached to an upstream end (in the drawing, lower end) of the suction pipe 107 in a detachable manner from the suction pipe 107.

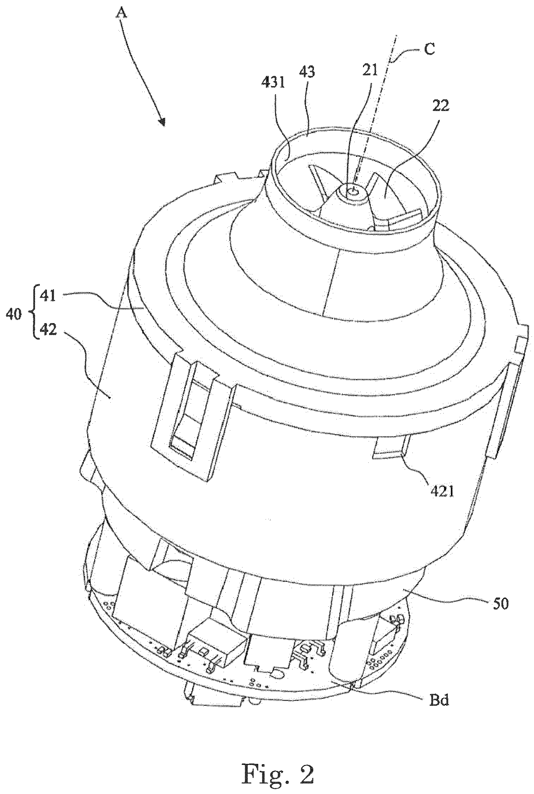

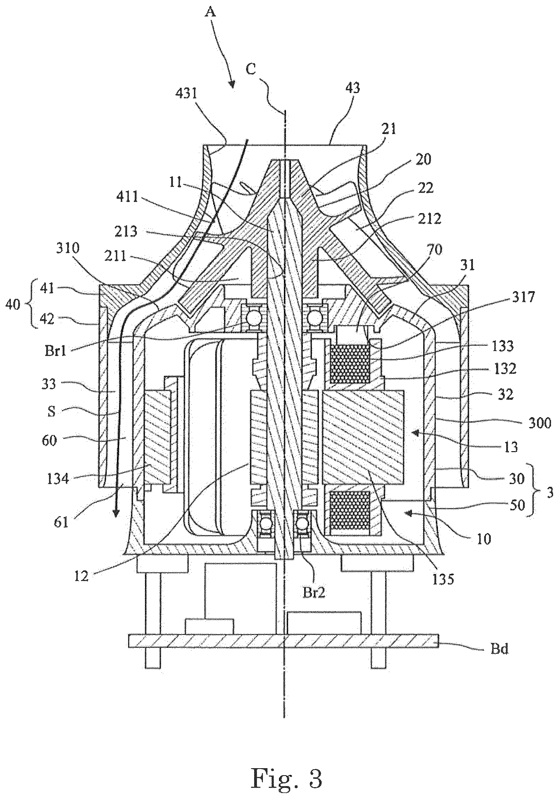

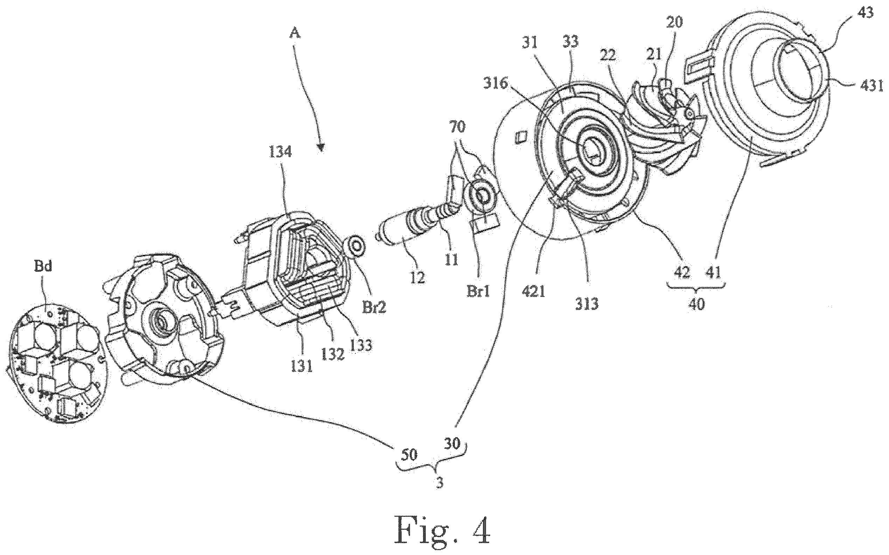

Fig. 2 is a perspective view of the blower A according to the first embodiment. Fig. 3 is a vertical sectional view of the blower A illustrated in Fig. 2. Fig. 4 is an exploded perspective view of the blower A illustrated in Fig. 2. The blower A is mounted in the vacuum cleaner 100 and sucks the air.

The blower A includes a motor 10, an impeller 20, a motor housing 3, a blower housing 40, a cover member 50, a thermally conductive member 70, and a circuit board Bd. The motor housing 3 includes an upper housing 30 (described later) and the cover member 50.

The impeller 20 and the motor housing 3 are housed in the blower housing 40. In the first embodiment, the blower housing 40 houses the upper housing 30. As illustrated in Fig. 3, a channel 60 is formed in a gap between the blower housing 40 and the upper housing 30. The channel 60 communicates with an impeller cover 41 (described later) at an upper end (upstream end) thereof. An air outlet port 61 is formed at a lower end (downstream end) of the channel 60.

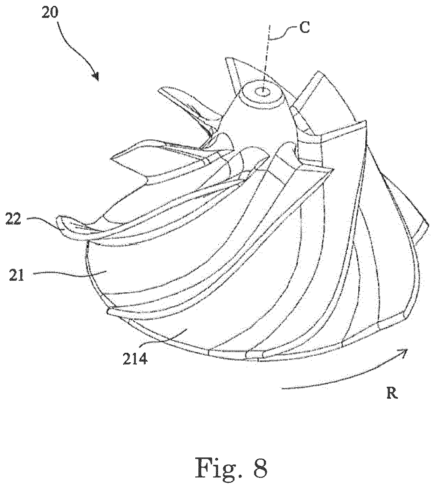

The motor 10 coupled with the impeller 20 is housed in the upper housing 30. In other words, the upper housing 30 surrounds the outer side in the radial direction of the motor 10. That is, the motor housing 3 surrounds the outer side in the radial direction of the motor 10. The impeller 20 rotates around the central axis C extending in the up-down direction. That is, the impeller 20 is rotatable around the central axis C extending in the up-down direction. The motor 10 is arranged below the impeller 20, and rotates the impeller 20. That is, the motor 10 rotates the impeller 20. More specifically, the impeller 20 is rotated, by the rotation of the motor 10, in a rotation direction R (see Fig. 8, described later) around the central axis C extending in the up-down direction. The airflow generated by the rotation of the impeller 20 is discharged from the air outlet port 61 through the channel 60.

As illustrated in Fig. 3, the motor 10 is arranged below the impeller 20. The motor 10 is housed in the upper housing 30. The motor 10 is a motor of inner rotor type. The motor 10 includes a shaft 11, a rotor 12, and a stator 13.

The shaft 11 has a columnar shape. The shaft 11 is arranged along the central axis C. As illustrated in Fig. 3, the shaft 11 penetrates through a through hole 316 provided in an upper-housing top part 31 (described later) of the upper housing 30. The impeller 20 is fixed to an end portion of the shaft 11 protruding from the upper-housing top part 31. The shaft 11 is rotatably supported by an upper bearing Br1 and a lower bearing Br2.

The upper bearing Br1 and the lower bearing Br2 are ball bearings. The shaft 11 is fixed to inner rings of the upper bearing Br1 and the lower bearing Br2. For the fixing, a method, such as insertion with an adhesive or press fitting, may be employed. An outer ring of the upper bearing Br1 is fixed to the upper housing 30. An outer ring of the lower bearing Br2 is fixed to the cover member 50. It is to be noted that the upper bearing Br1 and the lower bearing Br2 are not limited to the ball bearings. At least a portion of the upper bearing Br1 is arranged in a lower-surface recess 211 (described later) of the impeller 20. Hence, the lengths in the axial direction of the upper bearing Br1 and the lower bearing Br2 can be increased. Also, the upper bearing Br1 can be arranged at a position close to a boss portion 212 (described later) of the impeller 20. Hence, deformation, such as a bending, of the shaft 11 during the rotation of the impeller 20 can be restricted.

The rotor 12 is fixed to the shaft 11. The rotor 12 rotates together with the shaft 11. That is, the rotor 12 is fixed to the shaft 11, and rotates together with the shaft 11. The rotor 12 has a plurality of magnets (not illustrated). The plurality of magnets are fixed to an outer peripheral surface of the shaft 11. The plurality of magnets have N-pole faces and S-pole faces alternately disposed.

Alternatively, a single ring-shaped magnet may be used instead of the plurality of magnets. In this case, the magnet may be polarized so that the N poles and S poles are alternately disposed in the circumferential direction. Still alternatively, the magnet may be integrally molded with resin containing magnetic material powder.

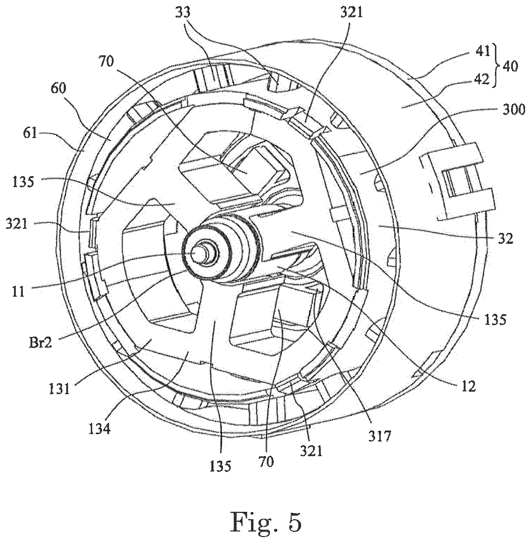

Fig. 5 is a perspective view of the upper housing 30 and a stator core 131 from below. The stator 13 is arranged at the outer side in the radial direction of the rotor 12. That is, the stator 13 faces the rotor 12 in the radial direction. More specifically, the rotor 12 is arranged at the inner side of the stator 13 in the radial direction. That is, the motor 10 is a motor of inner rotor type. Accordingly, the motor 10 suitable for high-speed rotation can be provided. Also, regarding the inner rotor type, a member is not arranged between the stator 13 and a top facing portion 314, and hence the thermally conductive member 70 is more easily arranged as compared with outer rotor type. The stator 13 includes a stator core 131, an insulator 132, and a coil 133. That is, the stator 13 includes the coil 133. The stator core 131 is formed by stacking magnetic steel sheets in the axial direction (in Fig. 3, the up-down direction). Alternatively, the stator core 131 is not limited to the multilayer body formed by stacking the magnetic steel sheets. For example, the stator core 131 may be a single member formed by firing or casting powder.

The stator core 131 includes a ring-shaped core back 134 and a plurality of teeth 135. The plurality of teeth 135 are radially formed to extend inward in the radial direction from an inner peripheral surface of the core back 134 toward the magnets (not illustrated) of the rotor 12. Accordingly, the plurality of teeth 135 are arranged in the circumferential direction. The coil 133 is formed by winding an electric conductor around the periphery of each tooth 135 via the insulator 132.

The motor 10 is a brushless motor. The brushless motor is driven by currents divided into three systems (hereinafter, referred to as three phases) having different supply timings. By supplying currents at predetermined timings to a plurality of coils 133, the coils 133 and the magnets of the rotor 12 are attracted to one another or repulsed from one another, and hence the rotor 12 is rotated. The motor 10 is a high-rotation motor rotatable at, for example, a rotation speed of 100,000 rotations or more per minute. In general, the smaller number of motors 10 and the smaller number of coils 133 are more advantageous to high-speed rotation. The motor 10 is controlled by the currents with the three phases. Hence, the number of coils 133 and the number of teeth 135 at which the coils 133 are arranged are three. That is, the motor 10 is a three-phase three-slot motor. The motor 10 is a three-phase motor and the stator 13 includes three coils 133. The three teeth 135 are arranged at equal intervals in the circumferential direction for well-balanced rotation.

In the stator core 131, an inner peripheral surface and an outer peripheral surface of the core back 134 have flat surfaces at positions near bottoms of the teeth 135. Accordingly, a space for winding wires can be effectively used. Also, by shortening a magnetic path, a loss can be decreased. The coil 133 can be prevented from being unwound while a turbulence in the magnetic distribution is prevented. Also, the inner peripheral surface and the outer peripheral surface of the core back 134 other than the portions thereof near the bottoms of the teeth 135 are curved surfaces. The curved surface portions of the core back 134 contact the inner surface of the upper housing 30. At this time, the curved surface portions may be press fitted to the inner surface of the upper housing 30. The press fit may be interference fit, or light press fit with a smaller force by press fitting, in other words, transition fit. The core back 134 does not have to have the flat surfaces and may have a cylindrical shape. In this case, an outer surface of the cylinder is press fitted to the upper housing 30. Alternatively, the core back 134 and the upper housing 30 may be fixed to one another by another method such as insertion with an adhesive.

A lead wire (not illustrated) is connected to the coil 133. One end of the lead wire is connected to a driving circuit (not illustrated) on the circuit board Bd disposed below the blower housing 40. Accordingly, the coil 133 is supplied with electric power.

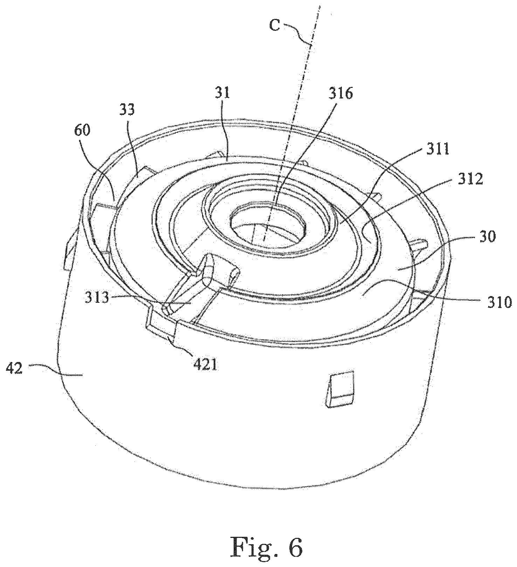

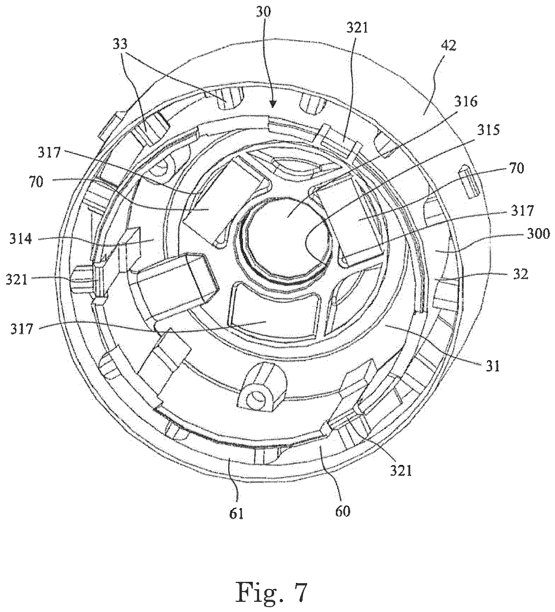

The motor housing 3 includes the upper housing 30 and the cover member 50. That is, the motor housing 3 includes the upper housing 30. Fig. 6 is a perspective view of the upper housing 30 from above. Fig. 7 is a perspective view of the upper housing 30 from below. As illustrated in Figs. 3, 5, 7, etc., the upper housing 30 surrounds the outer side in the radial direction of the motor 10. The upper housing 30 includes the upper-housing top part 31 and the upper-housing cylindrical part 32. The upper-housing top part 31 expands in a direction orthogonal to the central axis C. The upper-housing top part 31 has a circular shape in view in the axial direction. The upper-housing cylindrical part 32 extends downward in the axial direction from an outer edge in the radial direction of the upper-housing top part 31. The upper-housing top part 31 and the upper-housing cylindrical part 32 are an integrally molded part. The motor housing 3 can be made of, for example, metal or resin. In the first embodiment, the motor housing 3 is made of metal. Accordingly, the strength of the motor housing 3 can be increased. Further, the heat transmitted from the thermally conductive member 70 to the motor housing 3 can be efficiently radiated.

If the upper housing 30 is made of metal, the metal forming the upper housing 30 may be, for example, an aluminum alloy or a magnesium alloy. An aluminum alloy and a magnesium alloy are easily molded, lightweight, and inexpensive as compared with other metals.

The upper-housing top part 31 has a top upper surface 310. The top upper surface 310 includes a first top inclined surface 311 and a second top inclined surface 312. The first top inclined surface 311 has a conical shape directed inward as the first top inclined surface 311 extends upward along the axis. Also, the second top inclined surface 312 has a conical shape directed outward as the second top inclined surface 312 extends upward along the axis. The first top inclined surface 311 and the second top inclined surface 312 are connected to one another at lower end portions thereof in the axial direction. That is, the upper-housing top part 31 has a ring-shaped recess. The ring-shaped recess has a substantially V-like shape recessed downward.

Also, the top upper surface 310 has a top recess 313. The top recess 313 extends inward in the radial direction from an outer edge in the radial direction of the top upper surface 310. The details of the top recess 313 will be described later.

The upper-housing top part 31 has the top facing portion 314 that faces the rotor 12 and the stator 13 of the motor 10 in the axial direction. The top facing portion 314 is a lower surface of the upper-housing top part 31. The top facing portion 314 has, at a center portion thereof, a center recess 315 recessed upward and a through hole 316 extending therethrough in the axial direction. The outer ring of the upper bearing Br1 is fixed to the center recess 315. The shaft 11 penetrates through the through hole 316. The central axis of the center recess 315 is aligned with the central axis of the through hole 316. Also, the top facing portion 314 has a facing recess 317 recessed upward. That is, the top facing portion 314 that faces the rotor 12 and the stator 13 of the upper-housing top part 31 in the axial direction has the facing recess 317 recessed in the axial direction.

The thermally conductive member 70 is inserted into the facing recess 317. The top facing portion 314 has three facing recesses 317. The three facing recesses 317 are arrayed at equal intervals in the circumferential direction around the central axis C. Although the details are described later, the facing recesses 317 are arranged at positions overlapping with the coils 133, i.e., the teeth 135 in the axial direction when the stator core 131 is fixed to the upper housing 30.

The upper-housing cylindrical part 32 has a cylindrical shape. An upper end portion in the axial direction of the upper-housing cylindrical part 32 is coupled with the upper-housing top part 31. That is, the upper housing 30 has a bottomed cylindrical shape being open at the lower side. The stator core 131 is press fitted to an inner peripheral surface of the upper-housing top part 31. Also, the upper-housing cylindrical part 32 includes an axial contact portion 321 at a lower portion thereof. The axial contact portion 321 protrudes inward in the radial direction. As illustrated in Figs. 3 and 5, the axial contact portion 321 contacts a lower end surface in the axial direction of the stator core 131 and restricts downward movement of the stator core 131. The thermally conductive member 70 is arranged between the upper side in the axial direction of the stator 13 and the top facing portion 314. The stator 13 is pressed downward in the axial direction by an elastic force of the thermally conductive member 70. The axial contact portion 321 causes a force in a direction opposite to the direction of the elastic force from the thermally conductive member 70 to act on the stator 13.

As illustrated in Fig. 5, the motor 10 includes a plurality of axial contact portions 321. More specifically, three axial contact portions 321 are provided at positions overlapping in the axial direction with portions of the stator core 131 of the upper-housing cylindrical part 32 which contact the upper housing 30. Since the three axial contact portions 321 are arranged at equal intervals in the circumferential direction, a force can act on the stator core 131 from the axial contact portions 321. Accordingly, a uniform or substantially uniform force in the circumferential direction can act on the stator core 131.

The axial contact portions 321 only have to contact a surface facing downward in the axial direction of the stator core 131, and the contact surface is not limited to the lower end surface. While the axial contact portions 321 contact the stator core 131, it is not limited thereto. For example, if the insulator 132 and the coils 133 have sufficient strengths, the axial contact portions 321 may contact the insulator 132 or the coils 133.

Alternatively, the axial contact portions 321 may protrude inward in the circumferential direction in advance. When the stator core 131, that is, the stator 13 is attached, the axial contact portions 321 may be pressed by the stator core 131 in the radial direction. Still alternatively, after the stator core 131 is attached to the upper housing 30, the entirely or portions of the axial contact portions 321 may be bent in the circumferential direction. Yet alternatively, the axial contact portions 321 do not have to be bent, and downward movement in the axial direction of the stator core 131 may be restricted by swaging.

A plurality of stator blades 33 are provided on an outer peripheral surface 300 of the upper housing 30. The stator blades 33 have plate-like shapes, and are more inclined in a direction opposite to the rotation direction of the impeller 20 as the stator blades 33 extend upward. The stator blades 33 are curved to protrude at the impeller 20 side. Outer edges of the plurality of stator blades 33 contact the blower housing 40, that is, an inner surface of the lower cover 42. The stator blades 33 are arranged side by side in the circumferential direction, and guide an airflow S downward when the blower A is driven.

The stator blades 33 are formed of the same member as that of the motor housing 3. In the first embodiment, the stator blades 33 and the upper housing 30 are an integrated member. That is, the stator blades 33 are formed of the same member as that of the upper housing 30. However, the stator blades 33 and the upper housing 30 may be separate members. If the stator blades 33 and the upper housing 30 are an integrated member, assembly work efficiency of the blower A is increased. If the motor 10 is connected to the upper housing 30 via the thermally conductive member 70, the heat generated by the thermally conductive member 70 is likely transmitted to the stator blades 33. Hence, cooling efficiency of the stator 13 is increased.

The motor housing 3 includes the disk-shaped cover member 50 below the motor housing 3 in the axial direction. The cover member 50 contacts a lower end portion in the axial direction of the upper housing cylindrical part 32. By attaching the cover member 50 to the lower end portion of the upper housing 30, the lower surface of the upper housing 30 is covered. The cover member 50 is fixed to the upper housing 30 by using a fixing tool such as a screw (not illustrated). The cover member 50 has a through hole that allows a lead wire to pass therethrough. As illustrated in Figs. 1, 3, etc., the circuit board Bd is arranged below the cover member 50. The upper housing 30 and the cover member 50 may be made of the same material, or different materials.

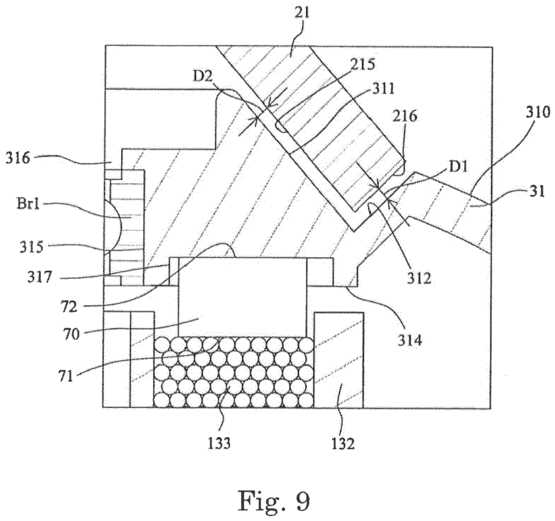

As illustrated in Fig. 9 (describe later), the thermally conductive member 70 is inserted into the facing recess 317 provided at the top facing portion 314 of the upper-housing top part 31. The thermally conductive member 70 includes a first contact portion 71 and a second contact portion 72. The thermally conductive member 70 is, for example, a thermally conductive member made of a material, such as silicon resin, having a high thermal conductivity (for example, having a thermal conductivity higher than that of the air). That is, the thermally conductive member 70 is made of resin. Also, the thermally conductive member 70 is elastically deformable. That is, the thermally conductive member 70 is arranged in the motor housing 3. More specifically, the thermally conductive member 70 is arranged in the upper housing 30.

The first contact portion 71 of the thermally conductive member 70 contacts the coil 133 of the stator 13 of the motor 10. That is, at least a portion of the first contact portion 71 of the thermally conductive member 70 contacts the coil 133. The first contact portion 71 only has to contact the stator 13, and the first contact portion 71 does not have to contact the coil 133. However, the first contact portion 71 preferably contacts the coil 133 of the motor 10 whose temperature becomes a high temperature. Accordingly, the heat generated by the coil 133 can be further efficiently transmitted to the upper housing 30. Also, the thermally conductive member 70 only has to contact the stator 13, and the thermally conductive member 70 may contact a portion other than the upper surface of the stator 13. Accordingly, the heat of the stator 13 is transmitted to the upper housing 30, and the temperature of the stator 13 is decreased.

Also, the second contact portion 72 of the thermally conductive member 70 is inserted into the facing recess 317 and contacts the upper-housing top part 31. That is, the second contact portion 72 of the thermally conductive member 70 contacts the upper-housing top part 31 in the axial direction. Also, at least a portion of the second contact portion 72 of the thermally conductive member 70 is housed in the facing recess 317. The thermally conductive member 70 only has to contact the upper housing 30, and the portion that contacts the second contact portion 72 of the thermally conductive member 70 is not limited to the upper-housing top part 31. For example, the contact portion may be the upper-housing cylindrical part 32.

As described above, since the thermally conductive member 70 is provided, the coil 133 is arranged via the upper-housing top part 31 and the thermally conductive member 70. As described above, since the thermally conductive member 70 is made of a material having a high thermal conductivity, the heat generated at the coil 133 and the stator core 131 due to energization can be transmitted to the upper-housing top part 31 via the thermally conductive member 70. The upper housing 30 has a larger surface area than that of the stator 13. Also, the airflow S generated by the impeller 20 flows along the outer surface of the upper housing 30, that is, the motor housing 3. Accordingly, the motor housing 3 with the temperature increased by the heat from the stator 13 can be efficiently cooled. That is, the thermally conductive member 70 includes the first contact portion 71 that contacts the stator 13, and the second contact portion 72 that contacts the motor housing 3. In the first embodiment, the second contact portion 72 contacts the upper housing 30.

Also, the thermally conductive member 70 is an elastically deformable member. Hence, even if the stator 13 and the upper housing 30 have manufacturing errors, the errors can be decreased by the elastic deformation. Also, the lower end portion of the stator core 131 is pressed in the axial direction by the axial contact portion 321. When the stator core 131 is attached to the upper housing cylindrical part 32, the lower surface of the stator core 131 is pressed by the axial contact portion 321 in a state in which the thermally conductive member 70 is elastically deformed. Accordingly, a rattle of the stator core 131 is restricted, and the thermally conductive member 70 can be brought into contact with the stator 13 and the upper-housing top part 31.

In the blower A according to the first embodiment, the thermally conductive member 70 causes an elastic force directed downward in the axial direction to act on the stator 13. The motor 10 includes a plurality of thermally conductive members 70. The plurality of thermally conductive members 70 are arranged at equal intervals around the central axis C, and hence the elastic forces of the thermally conductive members 70 can uniformly or substantially uniformly act on the stator 13. The blower A includes three thermally conductive members 70 to respectively bring the thermally conductive members 70 into contact with three coils 133. That is, the thermally conductive members 70 respectively contact the three coils 133. Accordingly, the thermally conductive members 70 can respectively cool the three coils 133. However, the configuration is not limited thereto. For example, a single thermally conductive member may be employed by using a circular ring-shaped thermally conductive member 70.

Also, since the at least a portion of the second contact portion 72 of the thermally conductive member 70 is inserted into the facing recess 317 of the upper-housing top part 31, movement of the thermally conductive member 70 in at least one of the circumferential direction and the radial direction can be restricted. Also, since the thermally conductive member 70 is inserted into the facing recess 317, a thermally conductive member 70 having a larger length in the axial direction can be used. Accordingly, cooling efficiency can be increased.

If the thermally conductive member 70 does not move or unlikely moves in the circumferential direction and (or) the radial direction, the facing recess 317 may be omitted, and the second contact portion 72 of the thermally conductive member 70 may be brought into contact with the top facing portion 314 having a flat surface or a curved surface. With this configuration, the step of forming the facing recess 317 can be omitted, and the time and effort required for manufacturing the upper housing 30 can be omitted. Also, without limiting to the facing recess 317, a plurality of protrusions that protrude from the top facing portion 314 and contact a side surface of the thermally conductive member 70 may be provided.

Next, the impeller 20 is described with reference to the drawing. Fig. 8 is a perspective view of the impeller 20. The impeller 20 is a mixed flow impeller formed of a resin molded part. The impeller 20 includes a hub portion 21 and a plurality of rotor blades 22. The impeller 20 is made of resin called engineering plastics. The engineering plastics are resin having good mechanical characteristics, such as the strength and heat resistance, as compared with other resin. Alternatively, the impeller 20 may be made of a material such as metal. The hub portion 21 has a diameter that increases as the hub portion 21 extends downward. In other words, the impeller 20 has the hub portion 21 whose diameter increases as the hub portion 21 extends downward. That is, the diameter of the hub portion 21 gradually increases downward.

The hub portion 21 includes the lower-surface recess 211 and the boss portion 212. The boss portion 212 has a hole 213 at the center of the boss portion 212 (in the central axis C). The shaft 11 of the motor 10 is press fitted to the hole 213. Accordingly, the boss portion 212 is coupled with the shaft 11, and the impeller 20 is rotated around the central axis C.

The plurality of rotor blades 22 are arranged on an outer surface 214 of the hub portion 21 side by side in the circumferential direction. In the first embodiment, the rotor blades 22 are arranged on the outer surface 214 of the hub portion 21 side by side in the circumferential direction at every predetermined period, and are integrally molded with the hub portion 21. Upper portions of the rotor blades 22 are arranged forward in the rotation direction R of lower portions of the rotor blades 22. That is, the rotor blades 22 are inclined with respect to the central axis C. The impeller 20 has the hub portion 21 whose diameter increases as the hub portion 21 extends downward, and the plurality of rotor blades 22 arranged on the outer surface 214 of the hub portion 21. The upper portions of the rotor blades 22 are arranged forward in the rotation direction R of the lower portions of the rotor blades 22.

A lower surface of the hub portion 21 of the impeller 20 has a first impeller inclined surface 215 and a second impeller inclined surface 216. The first impeller inclined surface 215 is a conical surface whose upper side in the axial direction is directed inward in the radial direction. Also, the second impeller inclined surface 216 is a conical surface located at the outer side in the radial direction of the first impeller inclined surface 215. The conical surface is directed outward as the conical surface extends upward in the axial direction. The first impeller inclined surface 215 and the second impeller inclined surface 216 are connected to one another at lower ends thereof in the axial direction. That is, the lower surface of the hub portion 21 has a ring-shaped protrusion. The ring-shaped protrusion has a substantially V-shaped cross section. When the impeller 20 is fixed to the shaft 11 of the motor 10 attached to the upper housing 30, the first impeller inclined surface 215 faces the first top inclined surface 311 in the axial direction, and the second impeller inclined surface 216 faces the second top inclined surface 312 in the axial direction. The details of the configuration will be described later.

Since the hub portion 21 of the impeller 20 has the lower-surface recess 211, the hub portion 21 can be reduced in weight. By reducing the weight of the impeller 20 which is a rotating part, power consumption can be reduced, and the impeller 20 can be easily rotated at high speed. Also, a sink mark can be restricted when the impeller 20 is molded.

Next, the blower housing 40 is described. The blower housing 40 surrounds the outer side in the radial direction of the upper housing 30 with a gap interposed therebetween. The blower housing 40 includes the impeller cover 41 and a lower cover 42.

The impeller cover 41 is arranged at least at the outer side in the radial direction of the impeller 20. That is, at least a portion of the impeller cover 41 is arranged at the outer side in the radial direction of the impeller 20. The impeller cover 41 serves as a guide that directs the airflow S generated by the rotation of the impeller 20 to be in the axial direction. The impeller cover 41 has the air inlet port 43 open in the up-down direction (axial direction). Also, a bell mouth 431 is provided at the air inlet port 43. The bell mouth 431 is bent inward from an upper end thereof and extends downward. Accordingly, the diameter of the air inlet port 43 is gradually decreased from the upper side toward the lower side. Since the impeller cover 41 has the bell mouth 431 at the air inlet port 43, the air can be smoothly sucked. Accordingly, the amount of the air to be sucked through the air inlet port 43 during the rotation of the impeller 20 is increased. Air sending efficiency of the blower A can be increased by the increased amount of the sucked air.

In the blower A according to the first embodiment, the impeller cover 41 is fixed to the lower cover 42. As the method of the fixture, for example, a protrusion is provided on an outer surface of the lower cover 42, and a beam is provided at the impeller cover 41. The beam extends downward in the axial direction and has a recess recessed outward in the radial direction from an inner surface at a tip end side of the impeller cover 41. When the impeller cover 41 is moved in the axial direction toward the lower cover 42, the beam is bent, and the protrusion of the lower cover 42 is inserted into and fixed to the recess of the beam of the impeller cover 41. The fixing method is not limited thereto. A fixing method may be employed from among a wide variety of methods that can restrict movement in the axial direction and the circumferential direction. It is preferable that positioning in the circumferential direction is available and attachment and detachment are easy.

The lower cover 42 has a cylindrical shape having a circular cross section and extending in the axial direction. The lower cover 42 is arranged at the outer side in the radial direction of the upper housing 30. That is, the blower housing 40 is arranged at the outer side in the radial direction of the motor housing 3 with a gap interposed therebetween. In the first embodiment, the blower housing 40 (lower cover 42) is arranged at the outer side in the radial direction of the upper housing 30 with a gap interposed therebetween. The stator blades 33 are arranged on the outer surface in the radial direction of the motor housing 3 at equal intervals in the circumferential direction. In the first embodiment, the plurality of stator blades 33 are arranged in the gap between the lower cover 42 and the upper housing 30 at equal intervals in the circumferential direction. That is, the plurality of stator blades 33 are arranged at the outer side in the radial direction with respect to the outer surface in the radial direction of the motor housing 3, and are arranged at the inner side in the radial direction with respect to the inner surface in the radial direction of the blower housing 40 (lower cover 42). The stator blades 33 contact at least the outer surface in the radial direction of the motor housing 3. In the first embodiment, the plurality of stator blades 33 are arranged at the outer side in the radial direction with respect to the outer surface in the radial direction of the upper housing 30, and are arranged at the inner side in the radial direction with respect to the inner surface in the radial direction of the blower housing 40 (lower cover 42). The stator blades 33 contact at least the outer surface in the radial direction of the upper housing 30. Also, the plurality of stator blades 33 are arranged on the outer surface in the radial direction of the upper housing 30 at equal intervals in the circumferential direction.

The case where the stator blades 33 contact the upper housing 30 includes a case where different members contact one another, and a case where members are integrally molded. Also, the stator blades 33 are arranged on the outer surface in the radial direction of the upper housing 30 at equal intervals in the circumferential direction. Accordingly, the airflow at the outer surface in the radial direction of the upper housing 30 can be more axially symmetrical, and cooling characteristics of the upper housing 30 can be more uniform in the circumferential direction.

In the motor 10, the coil 133 and the periphery of the coil 133 generate heat by the rotation of the motor 10. The heat is transmitted to the upper housing 30. The plurality of stator blades 33 protruding outward are provided on the outer peripheral surface 300 of the upper housing 30, and the stator blades 33 are arranged in the channel 60. Hence, the stator blades 33 rectify the airflow S, and also serve as radiation fins that radiate the heat of the upper housing 30 outside. Accordingly, the upper housing 30 with the temperature increased by the heat from the stator 13 can be efficiently cooled.

In the blower A according to the first embodiment, the upper housing 30 and the lower cover 42 are formed by integral molding with resin. The lower cover 42 has a through portion 421 at an upper end portion of the lower cover 42, at a position overlapping in the radial direction with the top recess 313 of the top upper surface 310 of the upper-housing top part 31 of the upper housing 30. The through portion 421 is a rectangular cut portion.

The lower cover 42 has openings at an upper end portion and a lower end portion of the lower cover 42. The upper end portion of the lower cover 42 is coupled with a lower end portion of the impeller cover 41. The lower end portion of the impeller cover 41 is inserted into the lower cover 42. An inner surface of the impeller cover 41 is smoothly continued from an inner surface of the lower cover 42, for example, in a manner capable of being differentiated. Accordingly, the inner surface of the blower housing 40 is smoothened, and a turbulence of the airflow S is restricted.

In the blower A according to the first embodiment, the upper housing 30 and the lower cover 42 are formed as an integrally molded part. However, it is not limited thereto. For example, the upper housing 30 and the lower cover 42 may be formed as separate members. In this case, in a state in which the impeller 20 is attached to the motor 10 attached to the upper housing 30, the rotation balance of the impeller 20 is adjusted. Then, the lower cover 42 can be attached. Hence, the through portion 421 of the lower cover 42 may be omitted. Also, if the lower cover 42 and the upper housing 30 are formed as separate members, the impeller cover 41 and the lower cover 42 may be integrated.

Fig. 9 is an enlarged sectional view of a section (section including the central axis C) in the radial direction of peripheral portions of the upper housing 30 and the impeller 20. When the impeller 20 is fixed to the shaft 11 of the motor 10 attached to the upper housing 30, the first impeller inclined surface 215 faces the first top inclined surface 311 in the axial direction, and the second impeller inclined surface 216 faces the second top inclined surface 312 in the axial direction.

An end portion at the inner side in the radial direction of the first top inclined surface 311 of the upper housing 30 is located at the upper side in the axial direction with respect to an outer edge in the radial direction of the first impeller inclined surface 215 of the impeller 20. Also, an outer edge in the radial direction of the second top inclined surface 312 is located at the upper side in the axial direction with respect to an end portion at the inner side in the radial direction of the second impeller inclined surface 216 of the impeller 20. That is, the ring-shaped protrusion formed by the first impeller inclined surface 215 and the second impeller inclined surface 216 of the impeller 20 is arranged in the ring-shaped recess formed by the first top inclined surface 311 and the second top inclined surface 312 of the upper-housing top part 31.

In the blower A according to the first embodiment, a distance D1 of a gap between the second top inclined surface 312 and the second impeller inclined surface 216 is the same between an end portion at the outer side in the radial direction and an end portion at the inner side in the radial direction of the gap. Being the "same" includes being substantially the same in addition to being strictly the same.

A distance D2 of a gap between the first impeller inclined surface 215 and the first top inclined surface 311 is smaller than the distance D1 of the gap between the second impeller inclined surface 216 and the second top inclined surface 312. Also, an end portion at the inner side in the circumferential direction of the first top inclined surface 311 is arranged at a higher position in the axial direction than the position of an end portion at the outer side in the radial direction of the second top inclined surface 312. The distance D2 of the gap between the first impeller inclined surface 215 and the first top inclined surface 311 may be larger than the distance D1 of the gap between the second impeller inclined surface 216 and the second top inclined surface 312.

As described above, the protrusion formed at the lower surface of the impeller 20 which is a rotating body is arranged in the recess formed at the top upper surface 310 of the upper-housing top part 31 facing the lower surface of the impeller 20, with a gap interposed therebetween. In this case, the minimum value of the gap between the upper housing 30 and the impeller 20 is smaller than the minimum value of the gap between the upper housing 30 and the impeller cover 41.

An axial labyrinth is formed between the impeller 20 and the upper-housing top part 31. That is, a labyrinth mechanism with a small gap in the axial direction can be provided. Since the axial labyrinth is formed, an airflow is unlikely generated. Accordingly, the airflow S generated at the impeller 20 unlikely flows between the impeller 20 and the upper housing 30, and the air sending efficiency is easily maintained. Also, the force by the airflow S flowing between the impeller 20 and the upper housing 30 unlikely acts on the impeller 20, and hence the rotation of the impeller 20 is stabilized.

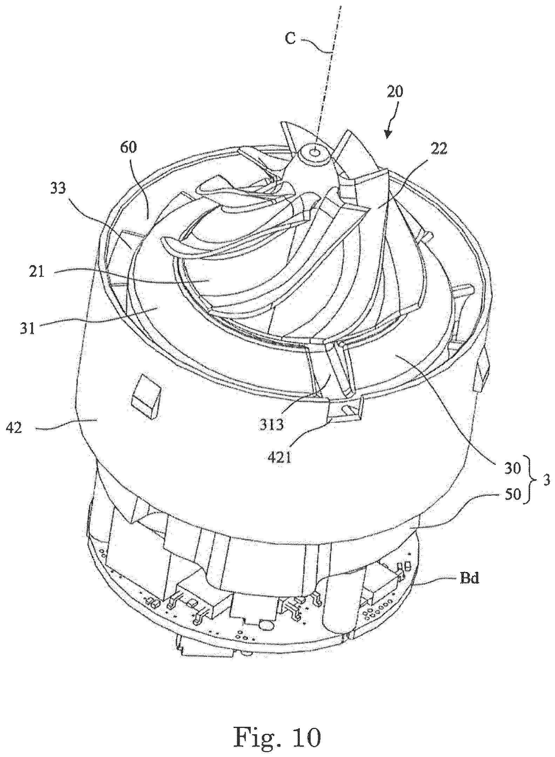

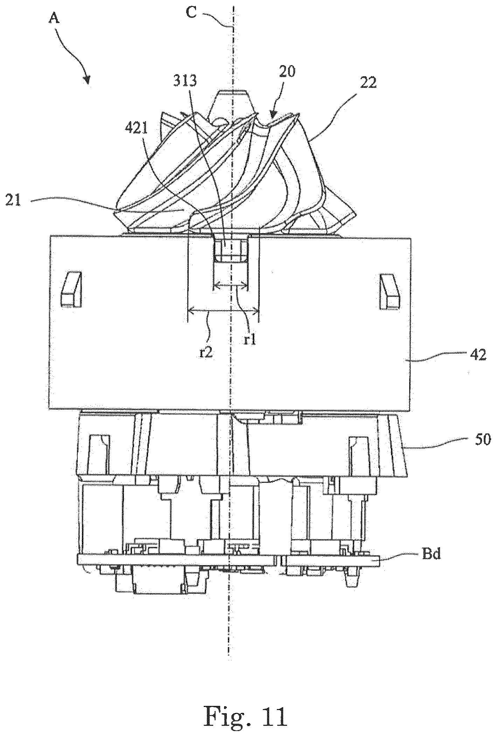

Fig. 10 is a perspective view of the blower A in a state in which the impeller cover 41 is removed. Fig. 11 is a side view of the blower A illustrated in Fig. 10. As illustrated in Figs. 10 and 11, the top upper surface 310 of the upper-housing top part 31 has the top recess 313. The top recess 313 is a rectangular recessed groove having a bottom surface when viewed in the radial direction.

A length r1 in the circumferential direction of the top recess 313 is smaller than a length r2 in the circumferential direction of a lower end portion in the axial direction of each rotor blade 22 of the impeller 20. By decreasing the width of the top recess 313, a turbulent unlikely occurs in the airflow S that is generated by the rotation of the impeller 20. Accordingly, a decrease in air sending efficiency of the blower A can be restricted.

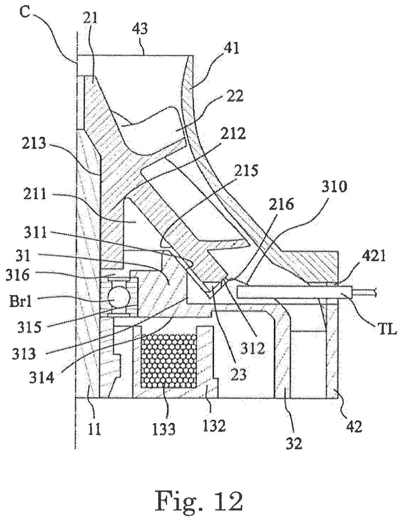

Fig. 12 is a schematic sectional view in a state in which the balance of the impeller is adjusted. As illustrated in Fig. 12, a tool TL is inserted from the outside into the lower cover 42 and penetrates through the through portion 421 of the lower cover 42. The penetrating tool TL is inserted into the top recess 313. As illustrated in Fig. 12, a bottom surface of the top recess 313 is located at the lower side in the axial direction with respect to the first top inclined surface 311 and the second top inclined surface 312. Hence, the tool TL inserted into the top recess 313 is located below the lower surface of the hub portion 21 of the impeller 20.

By cutting the lower surface of the hub portion 21 of the impeller 20 by using the tool TL, a cut portion 23 from which a portion of the hub portion 21 is removed is formed. By forming the cut portion 23, the weight balance in the circumferential direction of the hub portion 21 can be adjusted. Accordingly, the rotation of the impeller 20 can be restricted from being unbalanced. Also, since the impeller 20 is made of resin, the impeller 20 is easily cut by using the tool TL, and the rotation balance is easily adjusted.

The lower surface of the hub portion 21 of the impeller 20 is located at the outermost side in the radial direction in the hub portion 21. If the weight of the lower surface of the hub portion 21 is changed, the rotation of the impeller 20 (inertial force) is likely changed. Hence, by cutting the lower surface of the hub portion 21 and forming the cut portion 23, the rotation balance of the impeller 20 can be optimized by a small cutting amount.

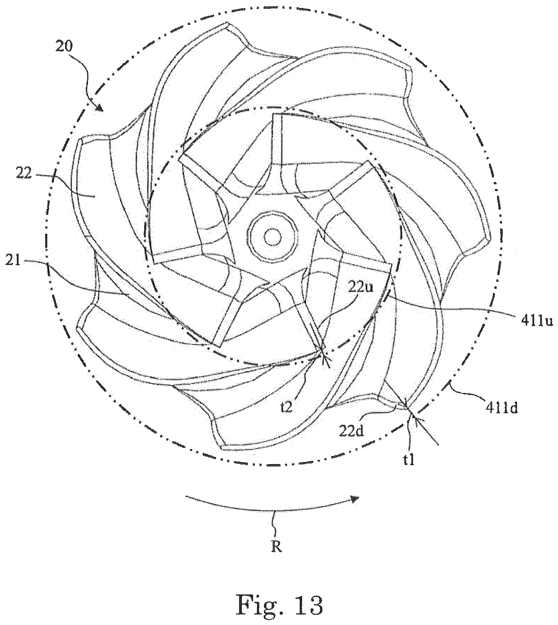

Fig. 13 is a plan view of the impeller 20. Fig. 13 illustrates an inner peripheral portion 411u of an inner peripheral surface 411 of the impeller cover 41 at which a gap between an upper end portion 22u in the axial direction of each rotor blade 22 and the inner peripheral portion 411u is the minimum, by using a two-dot chain line. Fig. 13 also illustrates an inner peripheral portion 411d of the inner peripheral surface 411 of the impeller cover 41 at which the gap between a lower end portion 22d in the axial direction of the rotor blade 22 and the inner peripheral portion 411d is the minimum, by using a two-dot chain line.

Generally, in the blower, the air sending efficiency is higher as the gap between each rotor blade 22 of the impeller 20 and the inner peripheral surface 411 of the impeller cover 41 is smaller. However, if the gap between the rotor blade 22 and the inner peripheral surface 411 is not proper, the air sending efficiency may be decreased. Hence, it is preferable to make the gap between the rotor blade 22 and the inner peripheral surface 411 proper.

When the impeller 20 is rotated, a centrifugal force acts on the hub portion 21 and the rotor blade 22. The hub portion 21 has a larger diameter at the lower side in the axial direction as compared with the diameter at the upper side. Hence, the centrifugal force at the outer edge in the radial direction is different between the upper side and the lower side of the impeller 20. Since the centrifugal force varies, the deformation amount due to the centrifugal force also varies. The lower side of the outer edge in the radial direction of the rotor blade 22 is farther from the central axis C as compared with the upper side of the outer edge. The centrifugal force at the lower side is larger than the centrifugal force at the upper side. That is, the deformation amount outward in the radial direction at the lower side of the rotor blade 22 is larger than that at the upper side during the rotation of the impeller 20.

The lower portion of the hub portion 21 expands outward in the radial direction as compared with the upper portion thereof. Hence, the deformation amount of the lower portion of the hub portion 21 is larger than the deformation amount of the upper portion. Also, the hub portion 21 has the lower-surface recess 211 at the lower surface, has a small thickness in the radial direction, and is likely deformed due to the centrifugal force. The lower portion of the hub portion 21 has a conical shape. Hence, the lower portion of the hub portion 21 is deformed outward and deformed upward by the rotation of the impeller 20. Owing to this, the lower end portion 22d of the rotor blade 22 is deformed outward in the radial direction and upward. Also, the upper end portion 22u side of the rotor blade 22 is deformed outward in the radial direction and downward.

Regarding the above-described configuration, when the impeller 20 is rotated, that is, when the blower A executes a blowing operation, the deformation amount in the circumferential direction of the rotor blade 22 of the impeller 20 at the lower end portion 22d in the axial direction is larger than that at the upper end portion 22u in the axial direction.

Also, the inner peripheral surface 411 (see Fig. 3) of the impeller cover 41 has a shape expanding outward in the radial direction as the inner peripheral surface 411 extends downward in the axial direction. Hence, the upper end portion 22u of the rotor blade 22 is deformed in the direction along the inner peripheral surface 411 of the impeller cover 41 (see Fig. 3). In contrast, the lower end portion 22d of the rotor blade 22 is deformed in a direction intersecting with the inner peripheral surface 411 of the impeller cover 41 (see Fig. 3). Hence, the gap between the rotor blade 22 and the inner peripheral surface 411 is likely decreased by the deformation due to the centrifugal force during the rotation of the impeller 20.

In the blower A, in a stationary state, the minimum value t1 of the gap between the lower end portion 22d of the rotor blade 22 and the inner peripheral portion 411d of the impeller cover 41 is larger than the minimum value t2 of the gap between the upper end portion 22u of the rotor blade 22 and the inner peripheral portion 411u of the impeller cover 41. With the configuration, even if the impeller 20 is rotated at high speed, the gap between the rotor blade 22 and the inner peripheral surface 411 of the impeller cover 41 can be properly maintained. Accordingly, the impeller 20 can be stably and smoothly rotated.

The vacuum cleaner 100 includes the blower A. In the vacuum cleaner 100 with the above-described configuration, when the motor 10 of the blower A is driven, the impeller 20 is rotated in the rotation direction R around the central axis C. Accordingly, the air containing foreign substances such as dust on the floor F circulates in the order of the suction nozzle 110 (see Fig. 1), the suction pipe 107 (see Fig. 1), the air inlet portion 103 (see Fig. 1), the dust collector, and the filter. The air which has passed through the filter is taken into the blower housing 40 through the air inlet port 43 of the blower A. At this time, the air sucked through the air inlet port 43 is increased by the bell mouth 431, and is smoothly guided to the area between the adjacent rotor blades 22. Hence, the air sending efficiency of the blower A can be increased. The vacuum cleaner 100 includes the blower A. Accordingly, the vacuum cleaner including the blower A that can cool the stator 13 can be provided without decreasing the air sending efficiency.

The air taken into the impeller cover 41 circulates in the area between the adjacent rotor blades 22, and is accelerated downward at the outer side in the radial direction by the rotating impeller 20. The air accelerated downward at the outer side in the radial direction blows downward of the impeller 20. The air blowing downward of the impeller 20 flows into the channel 60 which is the gap between the upper housing 30 and the lower cover 42. The air flowing into the channel 60 circulates between the stator blades 33 adjacent to one another in the circumferential direction.

The airflow S passing through lower ends of the stator blades 33 is discharged outside the blower housing 40 through the air outlet port 61. The airflow S discharged outside the blower housing 40 circulates through the air channel in the casing 102 of the vacuum cleaner 100, and is discharged outside the casing 102 through the air outlet portion 104 (see Fig. 1). Accordingly, the vacuum cleaner 100 can clean up the floor F.

In the motor 10, each coil 133 and the stator core 131 generate heat by energizing the coil 133. Also, the corresponding first contact portion 71 of the thermally conductive member 70 contacts the coil 133, the corresponding second contact portion 72 is inserted into the facing recess 317, and the second contact portion 72 contacts the upper-housing top part 31. Accordingly, the thermally conductive member 70 transmits the heat generated by the coil 133 and the stator core 131 to the upper-housing top part 31. The upper-housing top part 31 is integrally formed with the upper-housing cylindrical part 32. The airflow S generated by the impeller 20 flows at the outer surface of the upper-housing cylindrical part 32. Also, the plurality of stator blades 33 integrally formed with the outer surface of the upper-housing cylindrical part 32 are provided in the channel 60 in which the airflow S flows. Hence, the surface area in contact with the airflow S is increased, and heat radiation efficiency is increased. Accordingly, since the thermally conductive member 70 is provided, the temperature of the motor 10 can be decreased, and a decrease in efficiency due to the heat of the motor 10 can be restricted. Therefore, a decrease in air sending efficiency of the blower A can be restricted.

The lower surface of the hub portion 21 has the ring-shaped impeller protrusion including the first impeller inclined surface 215 and the second impeller inclined surface 216. The top upper surface 310 of the upper-housing top part 31 has the ring-shaped groove including the first top inclined surface 311 and the second top inclined surface 312 and recessed downward. At least a portion of the impeller protrusion is housed in the groove. Accordingly, the airflow S circulating through the channel 60 can be prevented from flowing into the impeller 20 (see Fig. 3) while an increase in size in the axial direction of the blower A is restricted. That is, a labyrinth effect is provided. Hence, the air sending efficiency of the blower A can be increased.

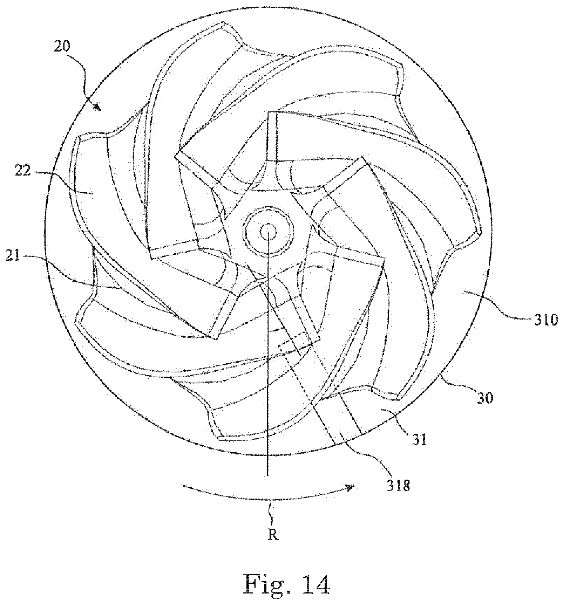

Fig. 14 is a plan view illustrating a modification of the top recess. As illustrated in Fig. 14, a top recess 318 is recessed downward from the top upper surface 310 similarly to the top recess 313. Also, the top recess 318 extends from the inner side to the outer side in the radial direction. The inner side in the radial direction of the top recess 318 is arranged at the rear side in the rotation direction of the impeller 20 with respect to the outer side in the radial direction of the top recess 318.

The rotor blades 22 included in the impeller 20 are mixed flow blades. Hence, the airflow generated by the rotation of the impeller 20 includes a component in the rotation direction of the impeller 20, that is, a component in the circumferential direction. In Fig. 14, the airflow includes a component directed to the rear side in the rotation direction of the impeller 20. That is, the airflow flows downward in the axial direction, and flows outward in the radial direction and rearward in the rotation direction of the impeller 20.

The inner side in the radial direction of the top recess 318 is arranged at the rear side in the rotation direction of the impeller 20 with respect to the outer side in the radial direction of the top recess 318. Hence, the airflow flows in a direction intersecting with the longitudinal direction of the top recess 318. With such a shape, the airflow unlikely flows into the top recess 318 and a turbulence of the airflow can be restricted.

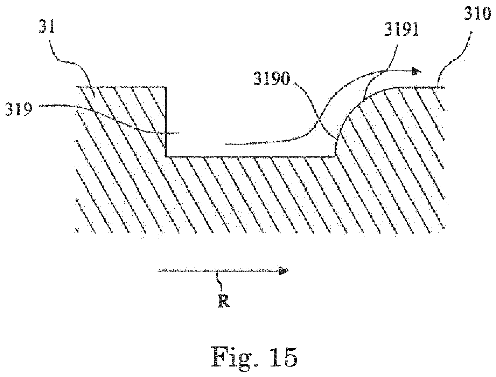

Fig. 15 is a sectional view of a top recess in a circumferential direction. When the blower A is viewed from above in the axial direction, the airflow flows to intersect with the top recess 313 and the top recess 318. At this time, the airflow flows into the top recess 313 and the top recess 318, and likely causes a turbulence of the airflow to occur. Hence, a top recess 319 illustrated in Fig. 15 includes a recess front side surface 3190 which is a side surface at the front side of the top recess 319 in the rotation direction of the impeller 20. The recess front side surface 3190 includes a front side-surface expanding portion 3191 that expands forward in the rotation direction of the impeller 20 as the front side-surface expanding portion 3191 extends upward.

Since the recess front side surface 3190 has the front side-surface expanding portion 3191, even when the air is guided to the top recess 319 by the rotation of the impeller 20, the air is smoothly discharged along the front side-surface expanding portion 3191, and hence entry of the airflow to the inside in the radial direction can be restricted. Also, since occurrence of a turbulent flow can be restricted at the top recess 319 and the periphery thereof, a decrease in air sending efficiency can be restricted. In Fig. 15, the front side-surface expanding portion 3191 has a curved surface protruding upward; however, it is not limited thereto. For example, the front side-surface expanding portion 3191 may be a flat surface or a curved surface recessed downward.

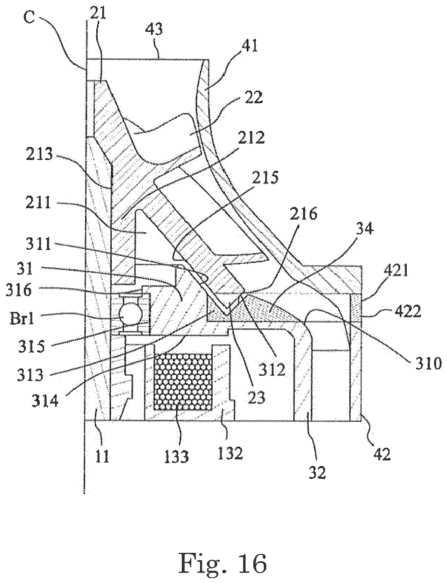

Fig. 16 is an enlarged sectional view of a section in the radial direction of the upper housing 30 (section including central axis C). Fig. 16 illustrates only one side in the radial direction with reference to the central axis C. As described above, when the airflow is generated by the rotation of the impeller 20, if the top upper surface 310 of the upper-housing top part 31 has the top recess 313, the top recess 313 may cause a turbulence to occur in the airflow. As illustrated in Fig. 16, an insertion member 34 may be inserted into the top recess 313 and the top recess 313 may be filled with the insertion member 34. By filling the top recess 313 with the insertion member 34, the airflow does not flow into the top recess 313 and a turbulence of the airflow can be restricted. The insertion member 34 preferably has a shape having a surface flush with the top upper surface 310 of the upper-housing top part 31. The insertion member 34 has a size that allows the insertion member 34 to be inserted from the through portion 421. If the lower cover 42 can be separated from the upper housing 30, or if the impeller cover 41 can be separated from the lower cover 42, the size of the insertion member 34 is not limited to the size regarding the through portion 421.

The through portion 421 is provided at the lower cover 42. The lower cover 42 defines the channel 60. If the airflow leaks from the through portion 421, the air sending efficiency is decreased. By closing the through portion 421 with a lid 422, the outflow of the air is restricted. Accordingly, a decrease in air sending efficiency is restricted.

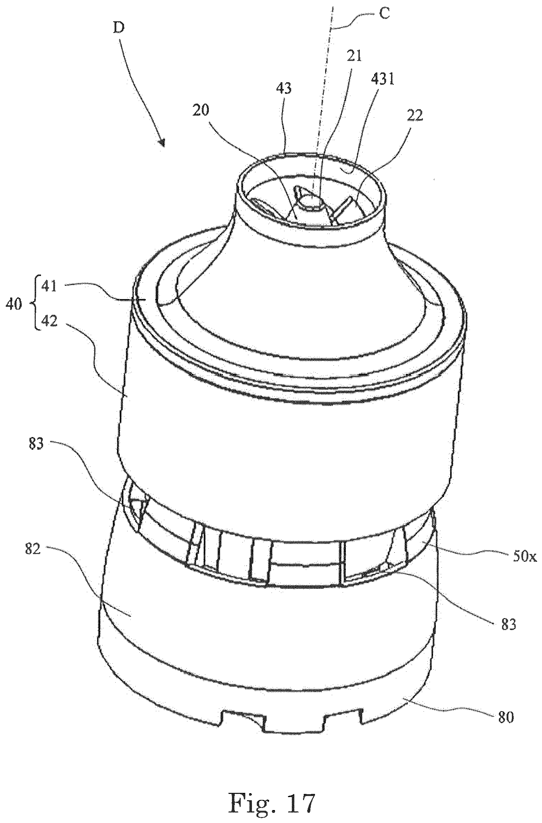

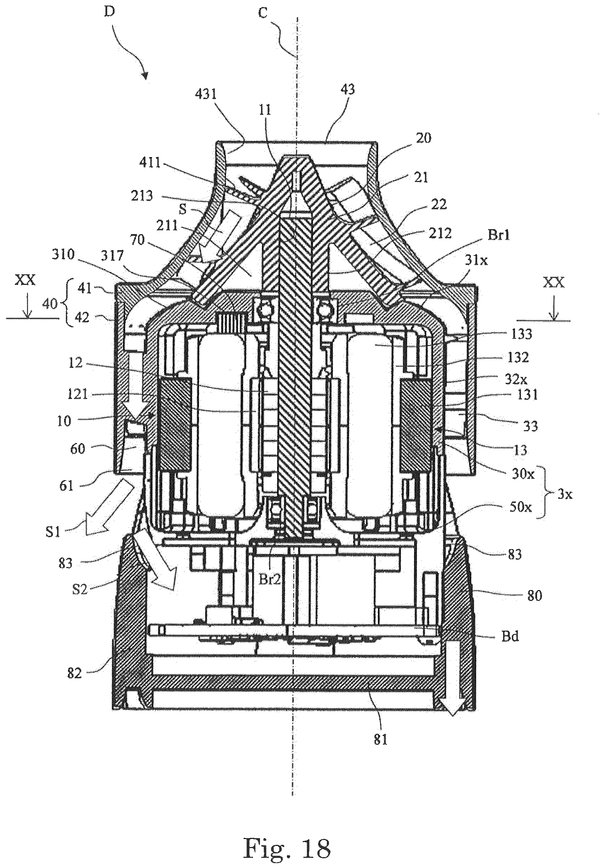

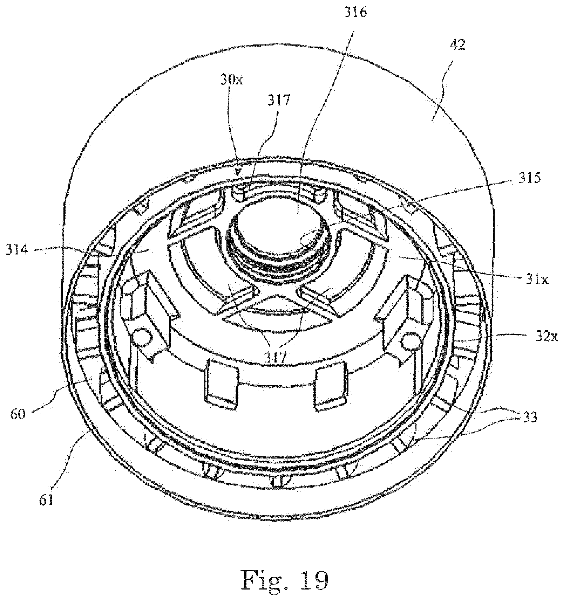

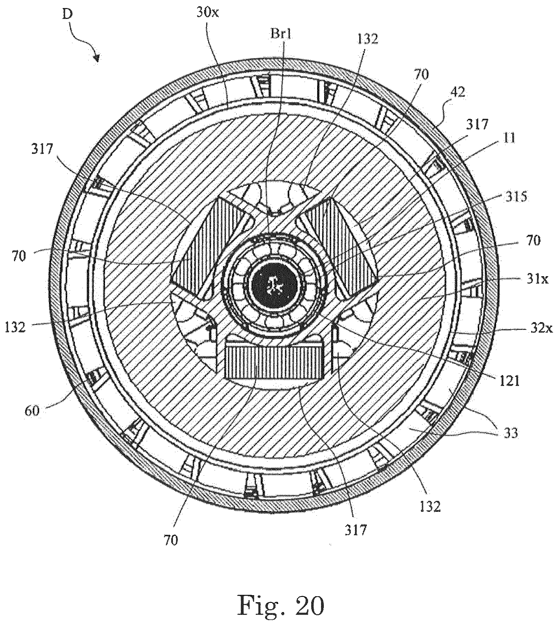

A blower according to a second embodiment of the present disclosure is described with reference to the drawings. Fig. 17 is a perspective view of the blower according to the second embodiment of the present disclosure. Fig. 18 is a vertical sectional view of the blower illustrated in Fig. 17. Fig. 19 is a perspective view of an upper housing 30x from below. Fig. 20 is a sectional view taken along line XX-XX of the blower illustrated in Fig. 18. A blower D according to the second embodiment differs from the blower A according to the first embodiment in that the blower D includes a board cover 80. Also, the upper housing 30x has a different shape. The blower D has a configuration similar to that of the blower A other than the above-described points. Hence, in the blower D, the same reference sign is applied to the part having substantially the same configuration as that of the blower A.

As illustrated in Figs. 17 and 18, the blower D includes a motor 10, an impeller 20, an upper housing 30x, a blower housing 40, a circuit board Bd, a thermally conductive member 70, and a board cover 80.

The motor 10 includes a shaft 11, a rotor 12, and a stator 13. The shaft 11 is arranged along the central axis C extending in the up-down direction. The rotor 12 has a magnet 121. The rotor 12 rotates together with the shaft 11. That is, the rotor 12 is fixed to the shaft 11. The stator 13 faces the magnet 121 in the radial direction.

The impeller 20 is fixed to the shaft 11. The impeller 20 is rotated around the central axis C when the shaft 11 is rotated. The upper housing 30x is arranged at the outer side in the radial direction of the motor 10. The blower housing 40 is arranged at the outer side in the radial direction of the impeller 20, faces an outer surface in the radial direction of the upper housing 30x with a gap interposed therebetween, and defines a channel 60 at the outer side in the radial direction of the upper housing 30x. The circuit board Bd is arranged at the lower side in the axial direction of the motor 10. The board cover 80 is arranged at the lower side with respect to the motor 10, and surrounds the outer side in the radial direction of the circuit board Bd. The thermally conductive member 70 is arranged in the upper housing 30x. At least a portion of the thermally conductive member 70 contacts the stator 13, and another portion of the thermally conductive member 70 contacts an inner surface of the upper housing 30x. Accordingly, the heat of the stator 13 is transmitted to the upper housing 30x via the thermally conductive member 70, and the temperature of the stator 13 is decreased. Also, since an outer surface in the radial direction of the upper housing 30x is exposed to the channel 60, the upper housing 30x at a high temperature can be efficiently cooled.

The motor 10, the impeller 20, the blower housing 40, the circuit board Bd, and the thermally conductive member 70 in the blower D have the same configurations as those of the blower A. Hence the detailed description is omitted.

The board cover 80 is described below. As illustrated in Figs. 17 and 18, the blower D includes the board cover 80 below a base member 50x. The board cover 80 includes a board-cover bottom plate 81, a board-cover cylindrical part 82, and an air inlet recess 83. The board-cover bottom plate 81 has a circular shape in view in the axial direction. The board-cover cylindrical part 82 extends upward in the axial direction from an outer edge in the radial direction of the board-cover bottom plate 81. That is, the board cover 80 has a bottomed cylindrical shape being open at an upper surface thereof. An upper end portion of the board-cover cylindrical part 82 contacts an outer surface in the radial direction of a lower portion of the base member 50x.

The air inlet recess 83 is formed at the upper end portion of the board-cover cylindrical part 82. The air inlet recess 83 is a recess which is recessed outward in the radial direction from an inner surface of the upper end portion of the board-cover cylindrical part 82. In the board cover 80, three air inlet recesses 83 are arranged at equal intervals in the circumferential direction (see Fig. 17). The number of air inlet recesses 83 is not limited to three. If a plurality of air inlet recesses 83 are provided, the air inlet recesses 83 may be arranged at different intervals in the circumferential direction.

As illustrated in Fig. 18, an upper portion of an inner surface of the board-cover cylindrical part 82 of the board cover 80 contacts a lower portion of an outer surface of the base member 50x in the radial direction. At this time, the air inlet recesses 83 define gaps between the base member 50x and the board-cover cylindrical part 82. The air inlet recesses 83 are formed below the air outlet port 61. Hence, part of the airflow S passing through the channel 60 and discharged through the air outlet port 61 flows into the board cover 80 through the air inlet recesses 83.

That is, the airflow discharged through the air outlet port 61 flows while divided into a first airflow S1 which is discharged to the outside and a second airflow S2 which flows into the board cover 80. The first airflow S1 is the same flow as the airflow S in the blower A, and therefore the detailed description is omitted. The second airflow S2 flows into the board cover 80. After the second airflow S2 flows through the inside of the board cover 80, the airflow S2 is discharged to the outside through a through hole (not illustrated) formed in the board-cover bottom plate 81. Since the second airflow S2 flows through the inside of the board cover 80, the temperatures of electronic components mounted on the circuit board Bd, for example, an integrated circuit (IC) and a capacitor, can be decreased. Accordingly, the electronic components mounted on the circuit board Bd can be efficiently cooled.

Also, the airflow which is discharged from the blower D, that is, the flow amount of the airflow S1 is smaller than the flow amount of the airflow S which is discharged from the blower A. However, the air outlet port 61 is formed in the gap between the upper housing 30x and the lower cover 42, over the entire periphery around the central axis C. Also, as illustrated in Fig. 17, the board cover 80 includes the three air inlet recesses 83. Hence the flow amount of the second airflow S2 is smaller than the flow amount of the first airflow S1. Owing to this, in the blower D, the decrease amount of the first airflow S1 relative to the total flow amount of the airflow which is discharged from the blower A can be decreased. The through hole through which the air in the board cover 80 is discharged is arranged at a position at which the airflow flowing through the through hole meets the first airflow S1. Hence, the decrease amount of the first airflow S1 relative to the airflow S can be further decreased.

The upper housing 30x includes an upper-housing top part 31x and an upper-housing cylindrical part 32x. The upper housing cylindrical part 32x has a cylindrical shape that extends in the axial direction, and that has an outer surface in the radial direction exposed to the channel. The upper-housing top part 31x expands inward in the radial direction from an upper end portion of the upper-housing cylindrical part 32x. The thermally conductive member 70 contacts the upper-housing top part 31x. Accordingly, since the upper-housing top part 31x is formed, the surface area of the upper housing 30x is increased, and the heat of the stator 13 is efficiently transmitted.

As illustrated in Figs. 18 and 19, a top facing portion 314 of the upper-housing top part 31x faces the rotor 12 and the stator 13 of the motor 10 of the upper-housing top part 31x in the axial direction. The thermally conductive member 70 that contacts both the top facing portion 314 and the stator 13 is arranged between the top facing portion 314 and the stator 13. Accordingly, the heat of the stator 13 is transmitted to the upper housing 30x via the thermally conductive member 70. Consequently the temperature of the stator 13 is decreased. Since the upper-housing top part 31x is formed, the surface area of the upper housing 30x is increased. Accordingly, the heat of the stator 13 is efficiently transmitted to the upper housing 30x. Also, since an outer surface in the radial direction of the upper housing 30x is exposed to the channel 60, the upper housing 30x at a high temperature can be efficiently cooled. The thermally conductive member 70 only has to contact the upper housing 30x, and the portion that the thermally conductive member 70 contacts is not limited to the upper-housing top part 31x.

The stator 13 includes a coil 133 formed by winding a wire around a stator core 131, and at least a portion of the thermally conductive member 70 contacts the coil 133. Accordingly, since the thermally conductive member 70 is brought into contact with the coil 133 whose temperature likely becomes a high temperature in the stator 13, the heat generated by the coil 133 is efficiently transmitted to the upper housing 30x. Consequently the temperatures of the coil 133 and the stator 13 are decreased.

As illustrated in Figs. 19 and 20, the upper-housing top part 31x has a facing recess 317 recessed upward, and the at least portion of the thermally conductive member 70 contacts the facing recess 317. Accordingly, the thermally conductive member 70 can be fixed at the facing recess 317. Also, by increasing the distance in the axial direction between the stator 13 and the upper-housing top part 31, a larger thermally conductive member 70 can be housed.

Also, as illustrated in Figs. 19 and 20, a plurality of stator blades 33 are arranged in the circumferential direction on an outer surface in the radial direction of the upper housing 30x. Hence, heat is transmitted from the upper housing 30x to the plurality of stator blades 33. The plurality of stator blades 33 are exposed to the channel. Hence, the heat of the upper housing 30x can be efficiently radiated. Accordingly, the temperature of the stator 13 is efficiently decreased. The stator blades 33 may be arranged at equal intervals in the circumferential direction. Hence, the heat of the upper housing 30x is transmitted to and radiated by the stator blades 33 substantially symmetrically in the circumferential direction. Accordingly, the temperature of the upper housing 30x is efficiently decreased.

The upper housing 30x may be made of metal. Accordingly, thermally conductive properties of the upper housing 30x are increased. In particular, if the upper housing 30x is made of an aluminum alloy or a magnesium alloy, the upper housing 30x is easily molded. Accordingly, such an upper housing 30x is relatively lightweight and inexpensive as compared with an upper housing 30x made of other metal.

The thermally conductive member 70 may be made of resin. Resin can be easily deformed, and hence the thermally conductive member 70 can be molded into a preferable shape in accordance with the shapes of the stator 13 and the upper housing 30x.

The motor 10 is a motor of inner rotor type. As compared with a case of outer rotor type, the rotor 12 is not arranged between the stator 13 and the upper housing 30x. Hence, the thermally conductive member 70 can be easily arranged between the stator 13 and the upper housing 30x.

The motor 10 may be a three-phase motor, the number of coils 133 may be three, and the number of thermally conductive members 70 may be three. Thus, the blower D good for use in high-speed rotation can be provided. Also, since the number of thermally conductive members 70 is three which is the minimum number for the three coils 133, the material cost of the thermally conductive members 70 can be decreased. Further, the number of assembly steps when the blower D is fabricated can be decreased.

The blower D according to the second embodiment can be used for, for example, a vacuum cleaner. Accordingly, the vacuum cleaner including the blower D that can efficiently radiate the heat of the stator 13 can be provided.

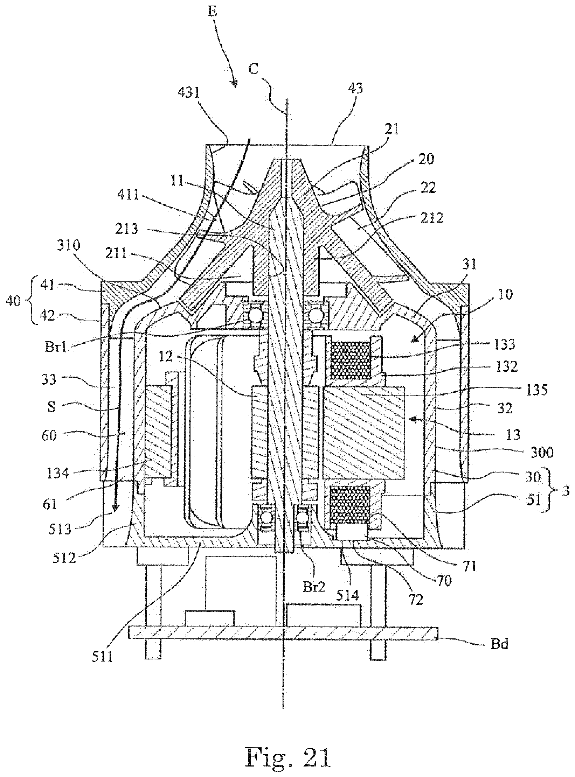

A blower according to a third embodiment of the present disclosure is described with reference to the drawing. Fig. 21 is a vertical sectional view of the blower according to the third embodiment of the present disclosure. A blower E illustrated in Fig. 21 differs from the aforementioned blower for the shape of a cover member 51 and the arrangement of a thermally conductive member 70. In the third embodiment, a motor housing 3 includes an upper housing 30 and a cover member 51. The blower E according to the third embodiment has a configuration similar to that of the blower A according to the first embodiment for the other parts. Hence, in the blower E, the same reference sign is applied to substantially the same part as that of the blower A, and the detailed description is omitted.

As illustrated in Fig. 21, the cover member 51 includes a cover bottom plate 511 expanding outward in the radial direction, a cover cylindrical part 512 extending upward in the axial direction from an outer edge of the cover bottom plate 511, and a plurality of fins 513 provided on an outer surface in the radial direction of the cover cylindrical part 512. An end surface at the upper side in the axial direction of the cover cylindrical part 512 contacts a lower end surface in the axial direction of an upper housing cylindrical part 32. Also, the cover bottom plate 511 holds a lower bearing Br2.

A cover recess 514 recessed downward in the axial direction is formed in a surface of the cover bottom plate 511 facing the stator 13 in the axial direction. A second contact portion 72 of the thermally conductive member 70 is inserted into the cover recess 514.

A first contact portion 71 of the thermally conductive member 70 contacts the coil 133 of the stator 13 of the motor 10. That is, at least a portion of the first contact portion 71 of the thermally conductive member 70 contacts the coil 133. The first contact portion 71 only has to contact the stator 13, and the first contact portion 71 does not have to contact the coil 133. However, the first contact portion 71 preferably contacts the coil 133 of the motor 10 whose temperature becomes a high temperature. Accordingly, the heat generated by the coil 133 can be further efficiently transmitted to the housing 3. Also, the thermally conductive member 70 only has to contact the stator 13, and the thermally conductive member 70 may contact a portion other than the upper surface of the stator 13. Accordingly, the heat of the stator 13 is transmitted to the motor housing 3, and the temperature of the stator 13 is decreased. In the third embodiment, the heat of the stator 13 is transmitted to the cover member 51, and hence the temperature of the stator 13 is decreased.

Also, the second contact portion 72 of the thermally conductive member 70 is inserted into the cover recess 514 and contacts the cover bottom plate 511. That is, the second contact portion 72 of the thermally conductive member 70 contacts the cover member 51 provided in the motor housing 3, in the axial direction. The thermally conductive member 70 only has to contact the cover member 51, and the portion that contacts the second contact portion 72 of the thermally conductive member 70 is not limited to the cover bottom plate 511. For example, the contact portion may be the cover cylindrical part 512.

The thermally conductive member 70 is arranged between the coil 133 and the cover bottom plate 511. As described above, since the thermally conductive member 70 is made of a material having a high thermal conductivity, the heat generated at the coil 133 and the stator core 131 due to energization can be transmitted to the cover member 51 via the thermally conductive member 70. The cover member 51 has a surface area larger than that of the stator 13, the outer surface of the cover member 51 is exposed to the outside air, and hence the heat from the stator 13 can be efficiently released to the outside.

Also, the plurality of fins 513 provided on the outer surface of the cover cylindrical part 512 are plate-shaped members protruding outward in the radial direction. The plurality of fins 513 are arranged side by side in the circumferential direction. The fins 513 contact the outer surface of the cover cylindrical part 512. The case where the cover cylindrical part 512 contacts the fins 513 includes a case where different members contact one another, and a case where members are integrally molded. In the third embodiment, the cover cylindrical part 512 and the fins 513 are an integrally molded part. The heat transmitted from the stator 13 to the cover bottom plate 511 via the thermally conductive member 70 is also transmitted to the fins 513 via the cover cylindrical part 512. Since the fins 513 are provided, the area of the cover member 51 in contact with the outside air, that is, the area of a radiation surface is increased, and heat radiation efficiency is increased. Accordingly, the stator 13 can be efficiently cooled.

Also, the fins 513 are arranged downstream of the air outlet port 61 in the flow direction of the airflow S flowing through the channel 60. Accordingly, the airflow S flows at the surfaces of the fins 513. New air continuously flows to the fins 513 by the airflow S. Hence, the cooling efficiency of the stator 13 can be further increased.

The fins 513 may be arranged at equal intervals in the circumferential direction, or may be arranged at nonuniform intervals. Preferably, the fins 513 are arranged not to interrupt the flow direction of the airflow S, that is, the fins 513 are arranged along the airflow S. With this arrangement, a turbulence of the airflow S can be restricted, and a decrease in air flowing efficiency and occurrence of a noise can be restricted.

In the blower E according to the third embodiment, the thermally conductive member 70 causes an elastic force directed upward in the axial direction to act on the stator 13. The motor 10 includes a plurality of thermally conductive members 70. The plurality of thermally conductive members 70 are arranged at equal intervals around the central axis C, and hence the elastic forces of the thermally conductive members 70 can uniformly or substantially uniformly act on the stator 13. The blower E includes three thermally conductive members 70 to respectively bring the thermally conductive members 70 into contact with three coils 133. That is, the thermally conductive members 70 respectively contact the three coils 133. Accordingly, the thermally conductive members 70 can respectively cool the three coils 133. However, the configuration is not limited thereto. For example, a single thermally conductive member may be employed by using a circular ring-shaped thermally conductive member 70.

Also, since the at least a portion of the second contact portion 72 of each thermally conductive member 70 is inserted into the corresponding cover recess 514 of the cover bottom plate 511, movement of the thermally conductive member 70 in at least one of the circumferential direction and the radial direction is restricted. Also, by inserting the thermally conductive member 70 into the cover recess 514, a thermally conductive member 70 having a larger length in the axial direction can be used. Accordingly, cooling efficiency can be further increased.

If the thermally conductive member 70 does not move or unlikely moves in the circumferential direction and (or) the radial direction, the cover recess 514 may be omitted, and the second contact portion 72 of the thermally conductive member 70 may be brought into contact with the cover bottom plate 511 having a flat surface or a curved surface. With this configuration, the step of forming the cover recess 514 can be omitted, and the time and effort required for manufacturing the motor housing 3, that is, the upper cover member 51 can be omitted. Also, without limiting to the cover recess 514, a plurality of protrusions that protrude from the cover bottom plate 511 and contact a side surface of the thermally conductive member 70 may be provided.

In the blower E, since the thermally conductive member 70 is attached so as to contact the cover member 51, the stator 13 is attached to the upper housing 30 and then the thermally conductive member 70 is attached. Accordingly, the thermally conductive member 70 can be easily attached. Also, by removing the cover member 51, the thermally conductive member 70 can be moved. Accordingly, in the blower E, the thermally conductive member 70 can be easily replaced after assembly is completed. Hence, an optimal thermally conductive member 70 can be arranged, and the heat of the stator 13 can be efficiently radiated to the outside. Preferably, the motor housing 3 is made of metal. Hence, the heat of the stator 13 is further efficiently transmitted to the motor housing 3 via the thermally conductive member 70, and the stator 13 can be further efficiently cooled. In the third embodiment, if the cover member 51 of the motor housing 3 is made of metal, the above-describe effect can be provided. If the fins 513 are made of metal, thermally conductive properties are further increased, and the stator 13 can be further efficiently cooled.

The other features of the blower E according to the third embodiment are similar to those of the blower A according to the first embodiment.

The embodiments of the present disclosure can be used for, for example, a blower and a vacuum cleaner including the blower.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A blower (A) comprising:
an impeller (20) capable of rotating around a central axis (C);
a motor (10) that rotates the impeller (20);
a motor housing (3) surrounding an outer side in a radial direction of the motor (10); and
a thermally conductive member (70) arranged in the motor housing (3),
wherein the motor (10) includes
a shaft (11) arranged along the central axis (C),
a rotor (12) that is fixed to the shaft (11) and that rotates together with the shaft (11), and
a stator (13) facing the rotor (12) in the radial direction, and
wherein the thermally conductive member (70) includes
a first contact portion (71) that contacts the stator (13), and
a second contact portion (72) that contacts the motor housing (3).

2. The blower (A) according to claim 1,
wherein the stator (2) includes a coil (133), and
wherein at least a portion of the first contact portion (71) of the thermally conductive member (70) contacts the coil (133).

3. The blower (A) according to claim 2,
wherein the motor (10) is a three-phase motor,
wherein the stator (13) includes three coils (133), and
wherein the thermally conductive member (70) contacts each of the three coils (133).

4. The blower (A) according to any one of claims 1 to 3,
wherein the motor housing (3) includes an upper housing (30),
wherein the upper housing (30) includes
an upper-housing top part (31) expanding in a direction orthogonal to the central axis (C), and
an upper-housing cylindrical part (32) extending downward in an axial direction from an outer edge in the radial direction of the upper-housing top part (31), and
wherein the second contact portion (72) of the thermally conductive member (70) contacts the upper-housing top part (31) in the axial direction.

5. The blower (A) according to claim 4,
wherein the upper-housing top part (31) has a top facing portion (314) that faces the rotor (12) and the stator (13) in the axial direction, and the top facing portion (314) has a facing recess (317) recessed in the axial direction, and
wherein at least a portion of the second contact portion (72) of the thermally conductive member (70) is housed in the facing recess (317).

6. The blower (A) according to any one of claims 1 to 5,
wherein the thermally conductive member (70) is made of resin.

7. The blower (A) according to any one of claims 1 to 6, further comprising:
a blower housing (40) arranged at an outer side in the radial direction of the motor housing (3) with a gap interposed therebetween; and
a plurality of stator blades (33) arranged at an outer side in the radial direction with respect to an outer surface in the radial direction of the motor housing (3), arranged at an inner side in the radial direction with respect to an inner surface in the radial direction of the blower housing (40), and contacting at least the outer surface in the radial direction of the motor housing (3).

8. The blower (A) according to claim 7,
wherein the stator blades (33) are arranged on the outer surface in the radial direction of the motor housing (3) at equal intervals in a circumferential direction.

9. The blower (A) according to claim 7 or 8,
wherein the stator blades (33) are formed of the same member as a member of the motor housing (3).

10. The blower (A) according to any one of claims 1 to 9,
wherein the motor housing (3) is made of metal.

11. The blower (A) according to any one of claims 1 to 10,
wherein the rotor (12) is arranged at an inner side of the stator (13) in the radial direction.

12. A vacuum cleaner (100) comprising:
the blower (A) according to any one of claims 1 to 11.
